(19) Europäisches Patentamt
European Patent Office
Office européen des brevets

(11) **EP 2 096 472 A1**

(12) **EUROPEAN PATENT APPLICATION**
published in accordance with Art. 153(4) EPC

(43) Date of publication:
**02.09.2009 Bulletin 2009/36**

(51) Int Cl.:
**G02B 5/30** (2006.01)        **G02F 1/1335** (2006.01)

(21) Application number: **07831824.3**

(22) Date of filing: **14.11.2007**

(86) International application number:
**PCT/JP2007/072094**

(87) International publication number:
**WO 2008/069008 (12.06.2008 Gazette 2008/24)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **05.12.2006 JP 2006327871**

(71) Applicant: **Nippon Oil Corporation**
**Tokyo 105-8412 (JP)**

(72) Inventors:
• **NISHIMURA, Suzushi**
  **Yokohama-shi**
  **Kanagawa 231-0815 (JP)**
• **SUZAKI, Gorou**
  **Yokohama**
  **Kanagawa 231-0815 (JP)**

(74) Representative: **Siegert, Georg**
**Hoffmann - Eitle**
**Patent- und Rechtsanwälte**
**Arabellastrasse 4**
**81925 München (DE)**

(54) **WIRE GRID POLARIZER AND METHOD FOR MANUFACTURING THE WIRE GRID POLARIZER, AND PHASE DIFFERENCE FILM AND LIQUID CRYSTAL DISPLAY ELEMENT USING THE WIRE GRID POLARIZER**

(57)    A method for producing a wire-grid polarizer, comprising the steps of:
preparing a resin film including a concave part formed thereon, the concave part having a grating pattern of submicron size, the resin film having a visible-light transmittance of 80% or more; filling the concave part with an electroconductive nano-material having an average diameter equal to or smaller than 1/2 of an average linewidth of the concave part; and removing the electroconductive nano-material which has not been filled into the concave part.

## Description

## Technical Field

The present invention relates to a wire-grid polarizer, a method for producing the wire-grid polarizer, a retardation film and a liquid crystal display device using the retardation film.

## Background of the Invention

As polarizers in the field of optics, a sheet polarizer, a polarizing prism, a pile of plates, and a wire-grid polarizer are used. Among these polarizers, a wire-grid polarizer is a polarizer, having a metal grating with its grating spacing sufficiently shorter than the wavelength of light, utilizing an ability of reflecting polarized light parallel to a metal grating while allowing polarized light perpendicular to the grating to pass therethrough. Such wire-grid polarizer is producible as a thin film, and thus is used for various applications. Moreover, the wire-grid polarizer can attain a higher extinction ratio than a sheet polarizer, and furthermore has a high durability. As a result, the wire-grid polarizer is widely used as a polarizer in a projection optical system.

Heretofore, such a wire-grid polarizer has been used mainly as a polarizer for an infrared region. However, it is known that the wire-grid polarizer can also be used as a polarizer for a visible region (400 nm to 800 nm) by shortening the grating period of the metal grating, and a method for producing the same has been studied. For example, Japanese Unexamined Patent Application Publication No. 2006-201540 (Document 1) discloses a method for producing a wire-grid polarizer, including the steps of: uniaxially stretching a to-be-stretched member, which has a finely-grooved grating on its surface at a pitch of 0.01 $\mu$m to 100 $\mu$m, in a direction substantially parallel to a longitudinal direction of the grooved grating while leaving the to-be-stretched member free in a width direction substantially perpendicularly to the longitudinal direction; forming a metal layer on the finely-grooved grating of the stretched member thus uniaxially-stretched; and pressing a polarizing plate main frame against the stretched member and detaching the polarizing plate main frame from the stretched member to form metal wires on the polarizing plate main frame at a pitch corresponding to the fine grooves of the grating.

However, a method for producing a wire-grid polarizer as described in Document 1 requires complicated steps, particularly a step of depositing a metal that requires a vacuum process. Accordingly, this method is not suitable as an industrial production method of a wire-grid polarizer having a large area.

Meanwhile, Japanese Unexamined Patent Application Publication No. 2006-84776 (Document 2) discloses a method for producing a wire-grid polarizer, including the stages of: forming a mold; forming a thin metal film and a polymer in a predetermined order on a substrate; molding the polymer by utilizing the mold; etching the thin metal film by utilizing the molded polymer to form a metal grating pattern; and removing the polymer.

However, the method for producing a wire-grid polarizer as described in Document 2 requires the etching steps at least twice. Accordingly, this method is complicated in terms of the process, and also has a problem in the mass productivity.

## Disclosure of the Invention

The present invention has been made in consideration of the above-described problems in the conventional techniques. An object of the present invention is to provide a method for producing a wire-grid polarizer, enabling efficient and reliable production of a wire-grid polarizer which has a metal grating with a sufficiently short grating period and which can be used as a polarizer for a visible region; a wire-grid polarizer obtained according to the method; a retardation film including the wire-grid polarizer on its film surface; and a liquid crystal display device using the retardation film.

The present inventors have earnestly studied in order to achieve the above object. As a result, the inventors have revealed that, by a method for producing a wire-grid polarizer, comprising the steps of: preparing a resin film including a concave part formed thereon, the concave part having a grating pattern of submicron size, the resin film having a visible-light transmittance of 80% or more; filling the concave part with an electroconductive nano-material having an average diameter equal to or smaller than 1/2 of an average linewidth of the concave part; and removing the electroconductive nano-material which has not been filled into the concave part, it is made possible to efficiently and reliably produce a wire-grid polarizer which has a metal grating with a sufficiently short grating period and which can be used as a polarizer for a visible region. This discovery has led the inventors to complete the present invention.

To be more specific, a method for producing a wire-grid polarizer of the present invention is a method comprising the steps of:

preparing a resin film including a concave part formed thereon, the concave part having a grating pattern of submicron size, the resin film having a visible-light transmittance of 80% or more;

filling the concave part with an electroconductive nano-material having an average diameter equal to or smaller than 1/2 of an average linewidth of the concave part; and

removing the electroconductive nano-material which has not been filled into the concave part.

Moreover, in the method for producing a wire-grid polarizer of the present invention, an absolute value of an imaginary part of a complex refractive index of the electroconductive nano-material is preferably larger than 0.1.

Furthermore, in the method for producing a wire-grid polarizer of the present invention, the concave part formed on the resin film has a grating pattern with a grating period of 400 nm or less and a linewidth of 200 nm or less.

A wire-grid polarizer of the present invention comprises:

a resin film including a concave part formed thereon, the concave part having a grating pattern of submicron size, the resin film having a visible-light transmittance of 80% or more; and

any one of an electroconductive nano-material and an aggregate thereof which are filled into the concave part.

Moreover, in the wire-grid polarizer of the present invention, an absolute value of an imaginary part of a complex refractive index of the electroconductive nano-material is preferably larger than 0.1.

Furthermore, in the wire-grid polarizer of the present invention, the concave part formed on the resin film has a grating pattern with a grating period of 400 nm or less and a linewidth of 200 nm or less.

A retardation film of the present invention comprises the wire-grid polarizer. Moreover, a liquid crystal display device of the present invention comprises the retardation film.

According to the present invention, it is possible to provide: a method for producing a wire-grid polarizer, enabling efficient and reliable production of a wire-grid polarizer which has a metal grating with a sufficiently short grating period and which can be used as a polarizer for a visible region; a wire-grid polarizer obtained according to the method; a retardation film including the wire-grid polarizer on its film surface; and a liquid crystal display device using the retardation film.

**Brief Description of the Drawings**

FIG. 1 is a scanning electron microphotograph of a wire-grid polarizer obtained in Example 1.

FIG. 2 is a scanning electron microphotograph of a wire-grid polarizer obtained in Example 2.

FIG. 3 is a scanning electron microphotograph of a wire-grid polarizer obtained in Example 3.

FIG. 4 is a graph illustrating the relationship between the degree of polarization and the wavelength of transmitted light in the wire-grid polarizer obtained in Example 1.

FIG. 5 is a graph illustrating the relationship between the degree of polarization and the wavelength of transmitted light in the wire-grid polarizer obtained in Example 2.

FIG. 6 is a graph illustrating the relationship between the degree of polarization and the wavelength of transmitted light in the wire-grid polarizer obtained in Example 3.

**Detailed Description of the Preferred Embodiments**

The present invention will be described in detail below according to preferred embodiments.

Firstly, a method for producing a wire-grid polarizer of the present invention will be described. Specifically, the method for producing a wire-grid polarizer of the present invention is a method comprising the steps of:

preparing a resin film including a concave part formed thereon, the concave part having a grating pattern of submicron size, the resin film having a visible-light transmittance of 80% or more(first step);

filling the concave part with an electroconductive nano-material having an average diameter equal to or smaller than 1/2 of an average linewidth of the concave part (second step); and

removing the electroconductive nano-material which has not been filled into the concave part (third step).

In the first step, prepared is a resin film including a concave part formed thereon, the concave part having a grating pattern of submicron size, the resin film having a visible-light transmittance of 80% or more. In such a resin film, a concave part having a grating pattern of submicron size needs to be formed. In the present invention, such a concave part is filled with an electroconductive nano-material, which will be described later, to thus form a metal grating. Accordingly, the shorter the grating period of such a concave part, the shorter the grating period of the metal grating in a wire-grid polarizer to be produced. For this reason, in such a resin film, the concave part formed on the resin film preferably has a grating pattern with a grating period of 400 nm or less and a linewidth of 200 nm or less, and the concave part more preferably has a grating pattern with a grating period of 200 nm or less and a linewidth of 100 nm or less. If the grating period or the linewidth exceeds the upper limits, the degree of polarization in the visible region of the obtained wire-grid polarizer tends to be insufficient.

Moreover, such a resin film needs to have a visible-light transmittance of 80% or more. If the visible-light transmittance is less than 80%, the visible-light transmittance of the obtained wire-grid polarizer tends to be insufficient. Furthermore, although the thickness of such a resin film is not particularly limited, the thickness is preferably in a range from 0.5 $\mu$m to 300 $\mu$m, and more preferably in a range from 1 $\mu$m to 100 $\mu$m. If the thickness is less than the lower limit, the strength of the obtained wire-grid polarizer tends to be insufficient. Meanwhile, if the thickness exceeds the upper limit, the visible-light transmittance of the obtained wire-grid polarizer tends to be insufficient.

Additionally, the material of such a resin film is not particularly limited as long as the resin has a visible-light transmittance of 80% or more. The examples include: photocurable resins; thermosetting resins such as an epoxy resin and phenolic resin; and thermoplastic resins such as triacetyl cellulose, polyethylene terephthalate, poly(cycloolefin), polysulfone, polyethersulfone, polyetherimide, polycarbonate, polystyrene, polyethylene naphthalate, poly(methyl methacrylate), poly(trifluoroethyl methacrylate), poly(isobutyl methacrylate), polyethylene glycol bis(allyl carbonate), poly(methyl acrylate), poly(diallyl phthalate), poly(phenyl methacrylate), poly(vinyl benzoate), and an acrylic resin containing a lactone acid. These materials of the resin film can be used alone or in combination of two or more kinds.

Moreover, a method of preparing a resin film including a concave part having such a grating pattern formed thereon is not particularly limited. A method that can be adopted, for example, includes the steps of: forming a coating film on a mold by coating the mold with a hardening resin; disposing a support film on the coating film; forming a resin film by hardening the hardening resin to adhere the support film to the coating film including a concave part formed thereon, the concave part having a grating pattern; and detaching the resin film from the mold.

It is only required that such a mold include a concave part or a convex part on the surface so as to have a grating pattern of submicron size. For example, a reflection-type diffraction grating may be used as the mold. Moreover, the material of such a mold is not particularly limited, and may be a metal or an inorganic material such as glass. However, preferable are silicon, silicon carbide, silica glasses, silicas, nickel, and tantalum. Furthermore, as such a hardening resin, any one of a photocurable resin and a thermosetting resin can be used. However, from the perspective of workability, a photocurable resin is preferable. Additionally, it is only required that such a support film be a film made of a resin having a visible-light transmittance of 80% or more, and a known resin film can be used accordingly.

In the second step, the concave part is filled with an electroconductive nano-material having an average diameter equal to or smaller than 1/2 of an average linewidth of the concave part. Such an electroconductive nano-material refers to nanoparticles or nanofiber of electroconductive material. Moreover, examples of the electroconductive material include: metals such as silver, copper, gold, aluminum, tin oxide, zinc, tungsten, nickel and platinum; metal oxides such as tin oxide, fluorine-doped tin oxide, indium oxide, tin-doped indium oxide and zinc oxide; and carbon materials such as carbon nanotube, carbon nanofiber, fullerene and graphite.

Moreover, such an electroconductive nano-material needs to have an average diameter equal to or smaller than 1/2 of an average linewidth of the concave part. If the average diameter exceeds 1/2 of the average linewidth of the concave part, the concave part of the resin film cannot be filled with the electroconductive nano-material sufficiently. Note that the average diameter refers to an average particle diameter in a case where such an electroconductive nano-material is nanoparticles of electroconductive material, or refers to a diameter of an approximate circle inscribed to the cross-sectional shape of the cylinder in a case where the electroconductive nano-material is a nanotube or nanofiber of electroconductive material. Furthermore, in a case where such an electroconductive nano-material is nanoparticles of electroconductive material, the average particle diameter of the nanoparticles is preferably 30 nm or less, and more preferably in a range from 1 nm to 20 nm. If the average particle diameter exceeds the upper limit, there is a tendency that the concave part of the resin film cannot be filled with the electroconductive nano-material sufficiently. Meanwhile, nanoparticles with an average particle diameter less than the lower limit tend to be difficult to produce.

Furthermore, from the perspective of efficiently causing optical plasma resonance in order to achieve a high degree of polarization, an absolute value of an imaginary part of a complex refractive index of such an electroconductive nano-material is preferably larger than 0.1.

Additionally, as a method of filling the concave part with the electroconductive nano-material in the above-described manner, it is possible to adopt a method in which an ink or paste containing an electroconductive nano-material is applied to the surface of the resin film having the concave part formed thereon. By such a method, the concave part can be filled with the electroconductive nano-material, since the electroconductive nano-material has an average diameter equal to or smaller than 1/2 of an average linewidth of the concave part.

Additionally, as such an ink or paste containing an electroconductive nano-material, one that contains an electroconductive nano-material having a predetermined average diameter can be selected and used accordingly. It is possible to use an ink or paste that contains, besides the electroconductive nano-material, for example, a resin composition; an additive such as a dispersion stabilizer or a surfactant; and a dispersion medium such as water or an organic solvent. Furthermore, as such an ink or paste containing an electroconductive nano-material, inks or pastes that are described in, for example, International Publication No. WO2002/33554, Japanese Unexamined Patent Application Publication No. 2006-219693, Japanese Unexamined Patent Application Publication No. 2004-273205, Japanese Unexamined Patent Application Publication No. 2005-81501, International Application Japanese-Phase Publication No. 2005-531679, and International Application Japanese-Phase Publication No. 2005-507452 can be used. Additionally, ones that are commercially available may be used as such an ink or paste containing an electroconductive nano-material. For example, silver nano-metal ink, gold nano-metal ink, copper nano-metal ink, ITO (tin-doped indium oxide) nano-metal ink (these are available from ULVAC Materials, Inc.), and carbon nanofiber (available from JEMCO Inc.) can be used.

In the third step, the electroconductive nano-material which has not been filled into the concave part is removed. As examples of a method of removing the electroconductive nano-material which has not been filled into the concave part, the followings can be adopted: (i) a method in which the electroconductive nano-material which has not been filled into the concave part is wiped in a direction perpendicular to a grating longitudinal direction using a wiper; and (ii) a method in which the electroconductive nano-material which has not been filled into the concave part is scraped by pressing a thin metal plate such as a doctor blade used in gravure printing to the electroconductive nano-material. Moreover, as such a wiper, a low-dust wiper is preferably used. Furthermore, in such a third step, after the electroconductive nano-material which has not been filled into the concave part is removed, the electroconductive nano-material which has been filled into the concave part may be calcined or dried at a temperature of 80°C to 400°C for 3 minutes to 120 minutes, for example.

The method for producing a wire-grid polarizer of the present invention is a method comprising the above-described first, second and third steps. Such a method for producing a wire-grid polarizer, enables efficient and reliable production of a wire-grid polarizer which has a metal grating with a sufficiently short grating period and which can be used as a polarizer for a visible region.

Next, a wire-grid polarizer of the present invention will be described. Specifically, the wire-grid polarizer of the present invention comprises: a resin film including a concave part formed thereon, the concave part having a grating pattern of submicron size, the resin film having a visible-light transmittance of 80% or more; and

any one of an electroconductive nano-material and an aggregate thereof which are filled in the concave part.

Such a wire-grid polarizer can be obtained according to the above-described method for producing a wire-grid polarizer of the present invention. Moreover, such a wire-grid polarizer has a metal grating with a sufficiently short grating period, and can be used as a polarizer for a visible region.

The resin film according to the present invention includes a concave part formed thereon, the concave part having a grating pattern of submicron size, and has a visible-light transmittance of 80% or more. Moreover, in such a resin film, the concave part formed on the resin film preferably has a grating pattern with a grating period of 400 nm or less and a linewidth of 200 nm or less, and the concave part more preferably has a grating pattern with a grating period of 200 nm or less and a linewidth of 100 nm or less. If the grating period or the linewidth exceeds the upper limit, the degree of polarization in the visible region of the obtained wire-grid polarizer tends to be insufficient. Note that, as such a resin film, the same resin film as the one used in the above-described method for producing a wire-grid polarizer of the present invention can be used.

With the electroconductive nano-material according to the present invention, the concave part is filled. Alternatively, in the present invention, the concave part may be filled with an aggregate of such an electroconductive nano-material. Furthermore, from the perspective of efficiently causing optical plasma resonance in order to achieve a high degree of polarization, an absolute value of an imaginary part of a complex refractive index of such an electroconductive nano-material is preferably larger than 0.1. Additionally, as such an electroconductive nano-material, the same electroconductive nano-material as the one used in the above-described method for producing a wire-grid polarizer of the present invention can be used.

Next, a retardation film and a liquid crystal display device of the present invention will be described. Specifically, the retardation film of the present invention comprises the wire-grid polarizer. Such a retardation film is useful as a polarizer-integrated retardation film in the field of optics. Moreover, the liquid crystal display device of the present invention comprises such a retardation film.

Examples

Hereinafter, the present invention will be more specifically described on the basis of Examples. However, the present invention is not limited to the following Examples.

(Example 1)

Firstly, prepared were a silica-glass mold (produced by NTT-AT Nanofabrication Corporation, product name "NIM-80L RESO"), a UV curable resin (produced by TOAGOSEI CO., LTD., product name "UV-3400"), and a support film (produced by Fuji Photo Film Co., Ltd., product name "triacetylcellulose (TAC) film", film thickness: 80 $\mu$m).

Then, several droplets of the UV curable resin were added onto the silica-glass mold including a concave part formed thereon, the concave part having a grating pattern with a grating period of 200 nm and a linewidth of 100 nm. After the resultant mold was covered with the support film, the support film was rubbed with a handroller. Thereby, the UV curable resin was spread on the silica-glass mold uniformly. Subsequently, the UV curable resin was irradiated with an ultraviolet ray of 600 mJ/cm$^2$ from the support film side and hardened. Thereby, a coating film of the UV curable resin in which a concave part having a grating pattern was formed was caused to adhere to the support film. Thus, a resin film including the concave part having the grating pattern formed thereon was formed. Thereafter, the obtained resin film was detached from the silica-glass mold. Note that, in the obtained resin film, the concave part having a grating pattern with a grating period of 200 nm and a linewidth of 100 nm was formed.

Then, a sliver nano-metal ink (produced by ULVAC materials, Inc. , product name "Ag nano-metal ink Ag1TeH") was added dropwise to the surface of the obtained resin film. Thereby, the concave part formed in the resin film was filled with the silver nano-metal ink. Subsequently, the silver nano-metal ink which has not been filled into the concave part was wiped in a direction perpendicular to a grating longitudinal direction using a wiper (produced by Asahi Kasei Corporation, product name "Clean Wipe-P"). Thereafter, the remaining silver nano-metal ink in the concave part was dried at a temperature of 90°C for 1 hour. Thus, a wire-grid polarizer was obtained.

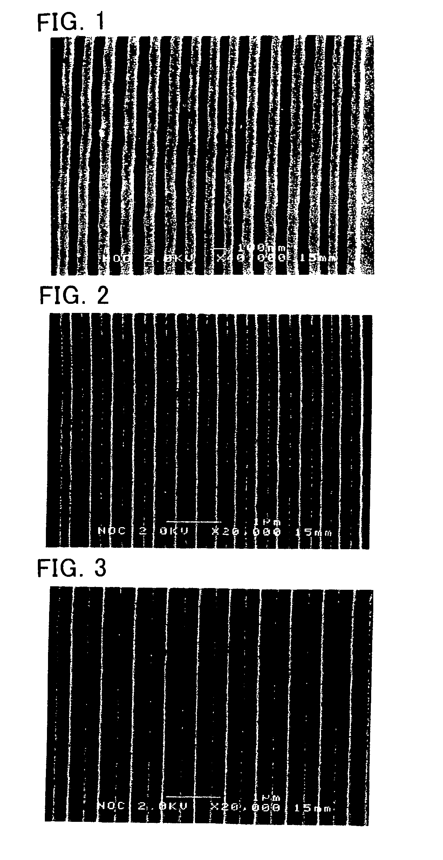

FIG. 1 shows a scanning electron microphotograph of the obtained wire-grid polarizer. As shown in FIG. 1, it was observed that the obtained wire-grid polarizer had a metal grating with a grating period of 200 nm and a linewidth of 100 nm.

(Example 2)

A resin film and a wire-grid polarizer were obtained in the same manner as that in Example 1 except that the UV curable resin was added dropwise onto a silica-glass mold including a concave part formed thereon, the concave part having a grating pattern with a grating period of 400 nm and a linewidth of 200 nm. Note that, in the obtained resin film, a concave part having a grating pattern with a grating period of 400 nm and a linewidth of 200 nm was formed.

FIG. 2 shows a scanning electron microphotograph of the obtained wire-grid polarizer. As shown in FIG. 2, it was observed that the obtained wire-grid polarizer had a metal grating with a grating period of 400 nm and a linewidth of 200 nm.

(Example 3)

A resin film and a wire-grid polarizer were obtained in the same manner as that in Example 1 except that the UV curable resin was added dropwise onto a silica-glass mold including a concave part formed thereon, the concave part having a grating pattern with a grating period of 600 nm and a linewidth of 300 nm. Note that, in the obtained resin film, a concave part having a grating pattern with a grating period of 600 nm and a linewidth of 300 nm was formed.

FIG. 3 shows a scanning electron microphotograph of the obtained wire-grid polarizer. As shown in FIG. 3, it was observed that the obtained wire-grid polarizer had a metal grating with a grating period of 600 nm and a linewidth of 300 nm.

<Measurement of degree of polarization>

(i) Method of measuring degree of polarization

The wire-grid polarizers obtained in Examples 1 to 3 were used as samples. The microspectroscope used here was a transmission polarizing microscope (produced by Minolta Co., Ltd.) equipped with a spectroscope (produced by Hamamatsu Photonics K.K., product name "PMA-11"). Using the microspectroscope, transmission spectra (spectra showing the relationship between the transmittance and the wavelength of transmitted light) of the samples were measured under polarized light. Then, from the obtained measurement results, the degrees of polarization in the visible region were calculated as follows.

Specifically, at first, while the angle of the transmission axis of polarizer attached to the microscope was set at 0°, the transmittance of a slide glass was measured; the obtained measurement value was regarded as 0° reference. Then, the sample was fixed onto the slide glass, which was placed on a sample stage of the microscope in a manner that the grating longitudinal direction was at 90°. The transmittance was measured while the sample was focused at 400-fold magnification. After that, a sample transmittance T0 in a case where the angle of the transmission axis of the polarizer attached to the microscope was set at 0° was calculated according to the following calculation formula:

$$T0 = (\texttt{transmittance of slide glass + sample}) / (0° \text{ reference}) \times 100\%.$$

Next, while the angle of the transmission axis of the polarizer attached to the microscope was set at 90°, the transmittance of a slide glass was measured; the obtained measurement value was regarded as 90° reference. Then, the sample was fixed on the slide glass, which was placed on the sample stage of the microscope in a manner that the grating longitudinal direction was at 90°. The transmittance was measured while the sample was focused at 400-fold magnification. After that, a sample transmittance T90 in a case where the angle of the transmission axis of the polarizer attached to the microscope was set at 90° was calculated according to the following calculation formula:

$$T90 = (\texttt{transmittance of slide glass + sample}) / (90° \text{ reference}) \times 100\%.$$

Next, using the obtained values of T0 and T90, a degree of polarization P of the sample was calculated according to the following calculation formula:

$$P = \{ (T0 - T90) / (T0 + T90) \}^{1/2}.$$

(ii) Measurement results

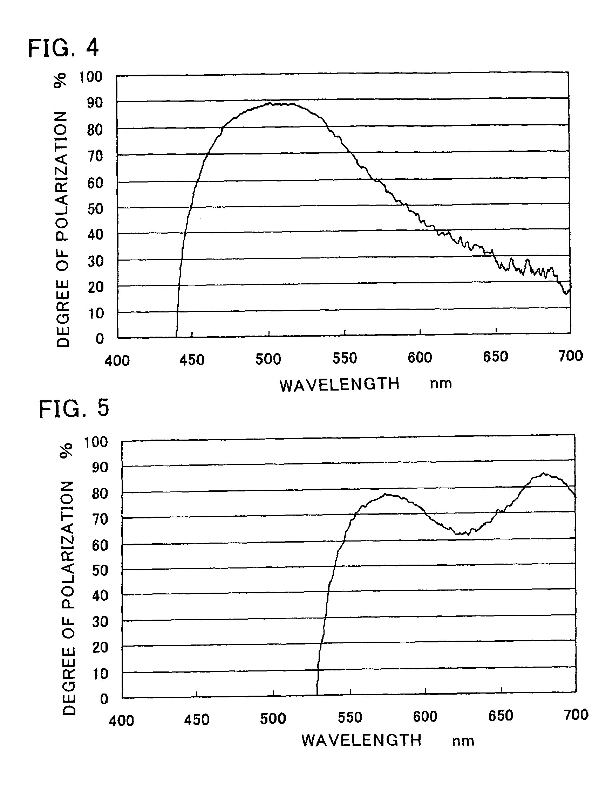

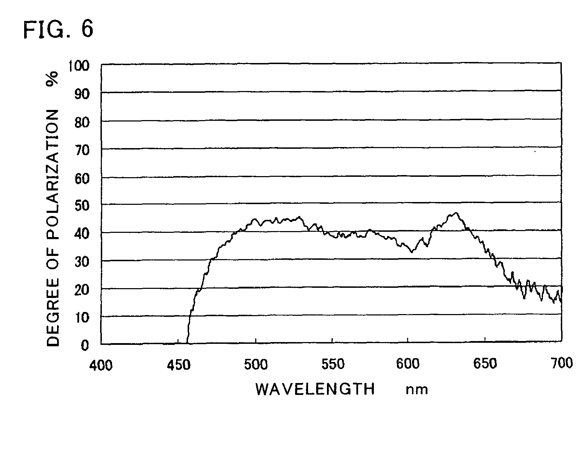

FIGS. 4 to 6 shows graphs illustrating the relationship between the degree of polarization and the wavelength of transmitted light in the wire-grid polarizers obtained in Examples 1 to 3, respectively.
As apparent from the result shown in FIG. 4, it was observed that a sufficient degree of polarization was obtained in a visible region (400 nm to 800 nm) with the wire-grid polarizer (Example 1) of the present invention. It was observed that the degree of polarization over 60% was obtained particularly in a wavelength range from 450 nm to 570 nm, and that the maximum value reached approximately 90%. Moreover, as apparent from the result shown in FIG. 5, it was observed that, although a sufficient degree of polarization was not obtained in a visible region where the wavelength was shorter than 550 nm with the wire-grid polarizer (Example 2) of the present invention, the degree of polarization over 60% was obtained in a visible region where the wavelength was longer than 550 nm. Furthermore, as apparent from the result shown in FIG. 6, some degree of polarization was obtained in a visible region with the wire-grid polarizer (Example 3) of the present invention, but the degree of polarization was less than 50%. Therefore, it was found out that the shorter the grating period and the linewidth, the higher the degree of polarization achieved in the visible region.
It was also found out that the method for producing a wire-grid polarizer of the present invention enables efficient and reliable production of a wire-grid polarizer which has a metal grating with a sufficiently short grating period, and which can be used as a polarizer for a visible region.

**Industrial Applicability**

As has been described above, according to the present invention, it is possible to provide: a method for producing a wire-grid polarizer, enabling efficient and reliable production of a wire-grid polarizer which has a metal grating with a sufficiently short grating period and which can be used as a polarizer for a visible region; a wire-grid polarizer obtained according to the method; a retardation film including the wire-grid polarizer on its film surface; and a liquid crystal display device using the retardation film.

**Claims**

1. A method for producing a wire-grid polarizer, comprising the steps of:

preparing a resin film including a concave part formed thereon, the concave part having a grating pattern of submicron size, the resin film having a visible-light transmittance of 80% or more;
filling the concave part with an electroconductive nano-material having an average diameter equal to or smaller than 1/2 of an average linewidth of the concave part; and
removing the electroconductive nano-material which has not been filled into the concave part.

2. The method for producing a wire-grid polarizer, according to claim 1, wherein
an absolute value of an imaginary part of a complex refractive index of the electroconductive nano-material is larger than 0.1.

3. The method for producing a wire-grid polarizer, according to claim 1, wherein
the concave part formed on the resin film has a grating pattern with a grating period of 400 nm or less and a linewidth of 200 nm or less.

4. A wire-grid polarizer comprising:

a resin film including a concave part formed thereon, the concave part having a grating pattern of submicron size, the resin film having a visible-light transmittance of 80% or more; and
any one of an electroconductive nano-material and an aggregate thereof which are filled into the concave part.

5. The wire-grid polarizer according to claim 4, wherein
an absolute value of an imaginary part of a complex refractive index of the electroconductive nano-material is larger than 0.1.

6. The wire-grid polarizer according to claim 4, wherein
the concave part formed on the resin film has a grating pattern with a grating period of 400 nm or less and a linewidth of 200 nm or less.

7. A retardation film comprising:

the wire-grid polarizer according to claim 4.

8. A liquid crystal display device comprising:

the retardation film according to claim 7.

FIG. 1

FIG. 2

FIG. 3

## FIG. 4

Graph: DEGREE OF POLARIZATION % (0–100) vs WAVELENGTH nm (400–700)

## FIG. 5

Graph: DEGREE OF POLARIZATION % (0–100) vs WAVELENGTH nm (400–700)

FIG. 6

## INTERNATIONAL SEARCH REPORT

| | International application No. |
|---|---|
| | PCT/JP2007/072094 |

A.  CLASSIFICATION OF SUBJECT MATTER
*G02B5/30*(2006.01)i, *G02F1/1335*(2006.01)i

According to International Patent Classification (IPC) or to both national classification and IPC

B.  FIELDS SEARCHED

Minimum documentation searched (classification system followed by classification symbols)
G02B5/30, G02F1/1335

Documentation searched other than minimum documentation to the extent that such documents are included in the fields searched
Jitsuyo Shinan Koho        1922-1996   Jitsuyo Shinan Toroku Koho   1996-2007
Kokai Jitsuyo Shinan Koho   1971-2007   Toroku Jitsuyo Shinan Koho   1994-2007

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| Y | JP 2006-220921 A (Seiko Epson Corp.), 24 August, 2006 (24.08.06), Full text; all drawings & US 2006/177571 A1    & EP 1691219 A | 1-8 |
| Y | JP 2006-78665 A (Nippon Zeon Co., Ltd.), 23 March, 2006 (23.03.06), Par. Nos. [0002], [0013] & WO 2006/4010 A1 | 1-8 |

☐ Further documents are listed in the continuation of Box C.          ☐ See patent family annex.

| | | |
|---|---|---|
| * | Special categories of cited documents: | "T"  later document published after the international filing date or priority date and not in conflict with the application but cited to understand the principle or theory underlying the invention |
| "A" | document defining the general state of the art which is not considered   to be of particular relevance | |
| "E" | earlier application or patent but published on or after the international filing date | "X"  document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&"  document member of the same patent family |

| Date of the actual completion of the international search | Date of mailing of the international search report |
|---|---|
| 13 December, 2007 (13.12.07) | 25 December, 2007 (25.12.07) |

| Name and mailing address of the ISA/ | Authorized officer |
|---|---|
| Japanese Patent Office | |
| Facsimile No. | Telephone No. |

Form PCT/ISA/210 (second sheet) (April 2007)

## EP 2 096 472 A1

### REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006201540 A
- JP 2006084776 A
- WO 200233554 A
- JP 2006219693 A
- JP 2004273205 A
- JP 2005081501 A
- JP 2005531679 A
- JP 2005507452 A